# EUROPÄISCHE PATENTSCHRIFT

(11) **EP 0 642 959 B1**
(45) Veröffentlichungstag und Bekanntmachung des Hinweises auf die Patenterteilung: **19.05.1999**
(21) Anmeldenummer: 94113352.2
(22) Anmeldetag: 26.08.1994
(51) Int. Cl.: B60R 25/04

(54) **Diebstahlsicherung für ein Kraftfahrzeug**
Anti-theft system for automotive vehicle
Dispositif antivol pour véhicule automobile

(30) Priorität: 11.09.1993 DE 4330899; 30.07.1994 DE 4427267
(43) Veröffentlichungstag der Anmeldung: 15.03.1995
(73) Patentinhaber: Volkswagen Aktiengesellschaft, 38436 Wolfsburg (DE)
(72) Erfinder: Herrmann, Ulrich, Dipl.-Ing., D-38108 Braunschweig (DE); Köhler, Karl-Heinz, Dipl.-Ing., D-85057 Ingolstadt (DE); Hansmann, Dietrich, Dipl.-Ing., D-38464 Gross Twülpstedt (DE); Bast, Josef, Dipl.-Ing., D-85053 Ingolstadt (DE)

(56) Entgegenhaltungen:
- EP-A- 0 303 059
- EP-A- 0 372 741
- EP-A- 0 630 785
- WO-A-93/05987
- DE-A- 4 141 504
- US-A- 4 754 255
- VDI BERICHTE 612: "ELEKTRONIK IM KRAFTFAHRZEUGBAU"; VDI-VERLAG DÜSSELDORF (DE); STAMM, K.: "MÖGLICHKEITEN UND KONSEQUENZEN VON KFZ-NETZWERKEN"; SEITEN 471-481

## Beschreibung

Die Erfindung betrifft eine insbesondere als Wegfahrsperre ausgebildete Diebstahlsicherung für Kraftfahrzeug nach dem Oberbegriff des Patentanspruchs 1.

Aus der EP 0 372 741 A2 ist eine Diebstahlsicherung in der Weise bekannt, daß mit einem Eingang des Steuergerätes für die Antriebsmaschine des Fahrzeugs ein Dekoder verbunden ist, der von einer beispielsweise vom Fahrer des Fahrzeugs betätigten externen Signalquelle, beispielsweise einem Schlüssel mit Transponder, ausgesandte Code-Signale mit gespeicherten Code-Signalen vergleicht und bei fehlender Übereinstimmung Sperrsignale an das Steuergerät abgibt, die die Übertragung von Ansteuersignalen für betriebswesentliche Funktionen, wie Zündung oder Kraftstoffeinspritzung, dann unterbinden.

Bei dem zitierten Stand der Technik ist mit einem anderen Eingang des Steuergerätes eine als Testleitung ausgebildete Datenleitung verbunden, die zu einem Anschluß, beispielsweise einem Stecker, zur Herstellung einer Verbindung mit einem fahrzeugexternen Diagnosegerät führt. Dieses gestattet also über die erwähnte Testleitung die Überprüfung des Steuergerätes. Nachteilig bei diesem Stand der Technik ist die Notwendigkeit eines Steuergerätes, das mit einem Immobilizer kommunizieren soll, mit zwei seriellen Eingängen. Da bei bisher eingesetzten Steuergeräten kein serieller Eingang für den Immobilizer vorgesehen ist, kann eine Wegfahrsperre demgemäß nur bei Neufahrzeugen zum Einsatz kommen, die einen zusätzlichen seriellen Eingang für die Diebstahlsicherung aufweisen. Eine Nachrüstung bei bereits im Verkehr befindlichen Fahrzeugen ist also nicht möglich.

Desweiteren ist aus der WO 93/05987 A1 ein dem Oberbegriff des Anspruchs 1 entsprechendes Sicherheitssystem für ein Kraftfahrzeug bekannt, bei dem von einer Leseeinrichtung der Code eines Schlüssels gelesen wird und in Abhängigkeit des gelesenen Codes ein verschlüsseltes Signal über einen Datenbus zu dem mit dem Datenbus verbundenen Steuergeräten gesendet wird, die nur bei Empfang eines vorbestimmten, gültigen Codes ihren Betrieb aufnehmen. Erhält ein Steuergerät ein ungültiges Signal von der Leseeinrichtung, sendet dieses ein Fehlersignal über den Datenbus sowohl an die Leseeinrichtung als auch an die anderen Steuergeräte.

Die europäische Patentanmeldung EP 0 303 059 A1 offenbart ein Diagnosesystem für Steuergeräte eines Kraftfahrzeuges, bei dem die zu testenden Steuergeräte über zwei Diagnose-Datenleitungen miteinander verbunden sind, an welche ein externes Testgerät anschließbar ist.

Aus der Veröffentlichung 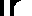 Möglichkeiten und Konsequenzen von Kfz-Netzwerken", VDI Berichte 612, VDI-Verlag GmbH, Düsseldorf 1986, Seiten 471-481 ist desweiteren eine Netzwerkstruktur zur Verbindung der unterschiedlichsten Steuergeräte im Kraftfahrzeug unter Verwendung eines Datenbusses bekannt, in welche eine Datenleitung für einen externen Diagnosetester einbindbar ist.

Der Erfindung liegt dementsprechend die Aufgabe zugrunde, eine gattungsgemäße Diebstahlsicherung unter Wahrung ihrer Vorteile - unter anderem Änderung des Codes bei jedem neuen Benutzungsfall des Fahrzeuges - zu schaffen, die auch bei Steuergeräten ohne zusätzlichen seriellen Eingang einsetzbar ist und deren Freigabesignal über den Anschluß des fahrzeugexternen Steuergerätes nicht abholbar ist.

Die Aufgabe wird durch die Merkmale des Patenanspruchs 1 gelöst. Vorteilhafte Weiterbildungen sind in den Unteransprüchen dargestellt.

Bei der Erfindung wird also in eleganter Weise eine Datenleitung zum Anschluß für ein fahrzeugexternes Steuergerät für die Diebstahlsicherung des Fahrzeugs ausgenutzt, in dem der Immobilizer mit dem Steuergerät über einen Abschnitt der Datenleitung kommuniziert, von dem bei Nichtvorliegen eines Anforderungssignals mindestens das fahrzeugexterne Steuergerät abgetrennt ist.

Dieses gewährleistet, daß das jeweils richtige Freigabesignal des Immobilizers nicht am Anschluß für das externe Steuergerät abgeholt werden kann, und zum anderen die Möglichkeit der Kommunikation der fahrzeuginternen Steuergeräte mit dem fahrzeugexternen Steuergerät im Diagnose- bzw. Servicebetrieb, wenn nach Aussendung des Anforderungssignals, die Datenleitung nach Beendigung der Kommunikation des Immobilizers wieder durchgeschaltet wird.

Nach einer vorteilhaften Weiterbildung der Erfindung ist das fahrzeugexterne Steuergerät ein Diagnosegerät.

Gemäß einer weiteren vorteilhaften Weiterbildung der Erfindung ist zur Abtrennung des Abschnitts der Datenleitung ein Schalter vorgesehen, der in Abhängigkeit des Anforderungssignals zumindest das externe Steuergerät von dem Abschnitt der Datenleitung, auf dem der Immobilizer mit dem Steuergerät kommuniziert, abtrennt.

Vorteilhafterweise wird das Anforderungssignal von dem fahrzeugexternen Steuergerät gesendet.

Bei nicht betriebsbereitem Immobilizer ist nach einer Ausgestaltung der Erfindung vorgesehen, daß der Schalter geschlossen und die Datenleitung sowohl mit dem externen Anschluß als auch mit allen fahrzeuginternen Steuergeräten verbunden ist. Dadurch wird sichergestellt, daß eine Kommunikation mit dem fahrzeugexternen Steuergerät auch im spannungslosen oder fehlerhaften Zustand des Immobilizers möglich ist.

Im normalen Fahrbetrieb - es liegt kein Anforderungssignal des externen Diagnosegerätes vor - übernimmt nach einer Ausbildung der Erfindung der Immobilizer oder eines der mit dem Immobilizer kommunizierenden Steuergeräte die fahrzeuginterne Masterfunktion. Nach Anschluß des fahrzeugexternen Diagnosegerätes verliert der fahrzeuginterne Master seine Funktion und die Kontrolle über die Datenkommunikation wird vom externen Steuergerät übernommen.

Eine Weiterbildung der Erfindung sieht vor daß das fahrzeugexterne Steuergerät einen uneingeschränkten Datenaustausch nur dann führen kann, wenn wenigstens eines der Steuergeräte durch den Immobilizer entriegelt ist, um Manipulationen zu verhindern.

Vorteilhafterweise bildet der Immobilizer aus den empfangenen Signalen abgeleitete Signale, die er an das zu sperrende oder zu entriegelnde Steuergerät sendet. Dadurch wird die Möglichkeit geschaffen, daß der im Immobilizer gespeicherte Sicherheitscode veränderbar ist, ohne in die Kommunikation mit dem Steuergerät eingreifen zu müssen. Außerdem wird dadurch ein zusätzlicher Schutz gegen ein Abhören des Sicherheitscodes des Immobilizers auf der Datenleitung realisiert.

Der Vorteil der Erfindung liegt somit in der Nutzung einer bereits vorhandenen Datenleitung für eine Diebstahlsicherung.

Nachfolgend wird die Erfindung anhand eines Ausführungsbeispiels näher beschrieben, bei dem der Immobilizer in der Datenleitung für ein externes Diagnosegerät angeordnet ist. Die zugehörigen Zeichnungen zeigen:
- Figur 1: eine schematische Darstellung der erfindungsgemäßen Diebstahlsicherung und
- Figur 2: ein Blockschaltbild der Diebstahlsicherung

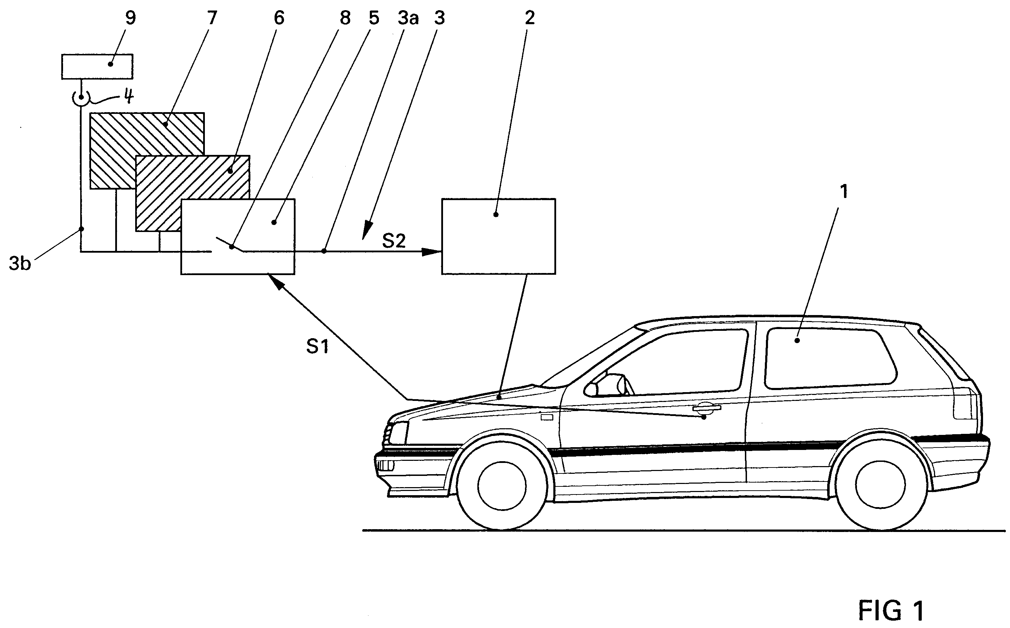

Bei der in Figur 1 dargestellten Diebstahlsicherung ist ein Immobilizer 5 vorgesehen, der über die als Testleitung ausgebildete, im Kraftfahrzeug bereits vorgesehene Datenleitung 3 für den Anschluß 4 eines externen Diagnosegerätes 9 mit dem Steuergerät 2 für die Antriebsmaschine kommuniziert. Der Immobilizer 5 ist dabei so ausgebildet, daß er beispielsweise von einem Schlüssel mit Transponder oder einer Codekarte 12 ausgesandte Signale S1 mit einem abgespeicherten Datencode vergleicht und in Abhängigkeit dieses Vergleichs abgeleitete Signale S2 zur Inbetriebnahme oder bei Nichtübereinstimmung der empfangenen mit dem abgespeicherten Daten zum Sperren der Antriebsmaschine an das Steuergerät 2 aussendet.

Dies geschieht unterAusnutzung des zwischen dem Immobilizer 5 und dem Steuergerät 2 liegenden Bereichs 3a der Testleitung. Nach dem Ausführungsbeispiel sind andere Steuergeräte 6,7, beispielsweise für das Getriebe, das ABS-System oder die Komfortelektronik, nicht in die Kommunikation mit dem Immobilizer 5 einbezogen. Dazu enthält der Immobilizer 5 einen Schalter 8, der während des normalen Fahrbetriebs, wenn kein Anforderungssignal S3 von dem externen Diagnosegerät 9 vorliegt, den Teil 3b der Testleitung und damit die Steuergeräte 6 und 7 sowie den Anschluß 4 von dem Teil 3a der Testleitung abtrennt. Dadurch werden die Steuergeräte 6 und 7 nicht von den Signalen S2 des Immobilizers beaufschlagt. Weiterhin erscheinen diese Signale auch nicht am Anschluß 4 und können somit nicht vom externen Diagnosegerät 9 abgehört werden.

Es ist jedoch auch möglich, daß weitere Steuergeräte 6, 7 in die Kommunikation mit dem Immobilizer 5 einbezogen sind.

Soll dagegen ein Test des Steuergerätes 2 und der weiteren Steuergeräte 6 und 7 mittels eines externen Diagnosegerätes 9 vorgenommen werden, wird von diesem ein entsprechendes Anforderungssignal an den Immobilizer 5 gegeben, der daraufhin seinen Schalter 8 in seine Schließstellung umlegt, so daß nunmehr eine direkte Verbindung zwischen dem Diagnosegerät 9 und dem Steuergerät 2 hergestellt ist.

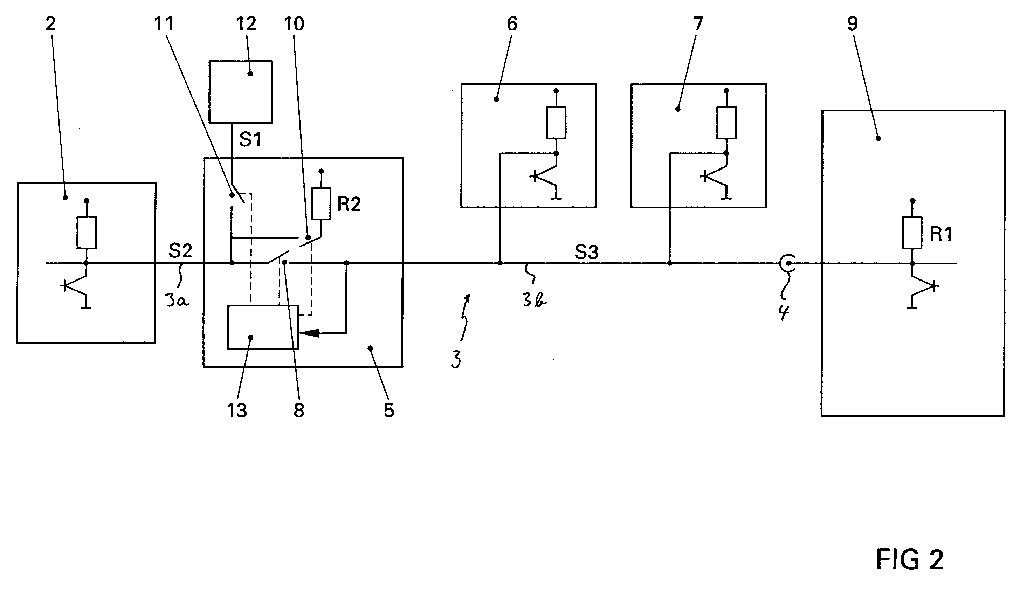

Auf der Testleitung 3 darf nur ein Steuergerät die Masterfunktion, das heißt die Kontrolle des Datenverkehrs, übernehmen. Das ist im Diagnosebetrieb immer das fahrzeugexterne Diagnosegerät 9. Dies wird dadurch erreicht, daß das Diagnosegerät 9 einen zusätzlichen Arbeitswiderstand R1 (Fig. 2) auf die Datenleitung 3 zuschaltet, um die Datenübertragung sicherzustellen und die Adressierung des jeweiligen Steuergerätes 2, 6, 7 vorzunehmen. Gleichzeitig wird nach Erhalt des Anforderungssignals der Arbeitswiderstand R2 über den Schalter 10 durch die Auswerteeinrichtung 13 von der Datenleitung 3 getrennt. Im Immobilizer 5 ist ein weiteres Schaltmittel 11 vorgesehen, das im Diagnosebetrieb die Leseeinrichtung 12 für die Signale S1 des Codeträgers vom Immobilizer 5 zur Erhöhung der Betriebssicherheit abtrennt. Die Betätigung dieses Schaltmittels 11 sowie des Schalters 8 wird in Abhängigkeit des Anforderungssignals S3 ebenfalls durch die Auswerteeinrichtung 13 gesteuert. Mit der Erfindung wird demgemäß eine Diebstahlsicherung für ein Kraftfahrzeug geschaffen, die eine bereits für andere Zwecke vorhandene; mit dem zu sichernden Steuergerät verbundene Datenleitung nutzt.

### BEZUGSZEICHEN

- 1: Kraftfahrzeug
- 2: Steuergerät für die Antriebsmaschine
- 3: Testleitung
- 3a: Teil der Testleitung zwischen dem Steuergerät 2 für die Antriebsmaschine und dem Immobilizer 5
- 3b: Teil der Testleitung zwischen dem Immobilizer 5 und dem Anschluß 4
- 4: Anschluß
- 5: Immobilizer
- 6: Steuergerät
- 7: Steuergerät
- 8: Schalter
- 9: fahrzeugexternes Diagnosegerät
- 10: Schalter
- 11: Schaltmittel
- 12: Leseeinrichtung
- 13: Auswerteeinrichtung
- S1: Signale
- S2: Signale
- S3: Anforderungssignal
- R1: Arbeitswiderstand
- R2: Arbeitswiderstand

## Patentansprüche

1. Diebstahlsicherung, insbesondere als Wegfahrsperre für Kraftfahrzeuge ausgebildet, die mit mindestens einem Steuergerät (2) kommuniziert und einen Immobilizer (5) aufweist, der eingehende Signale (S1) mit gespeicherten Daten vergleicht und bei fehlender Übereinstimmung Sperrsignale (S2) an das Steuergerät (2), insbesondere an das Steuergerät einer Antriebsmaschine, abgibt, die bei diesem die Übertragung von Ansteuersignalen für betriebswesentliche Funktionen unterbinden, wobei der Immobilizer (5) über eine bereits vorhandene, für andere Zwecke genutzte Datenleitung (3) mit dem Steuergerät kommuniziert, dadurch gekennzeichnet, daß die Datenleitung (3) einen Anschluß (4) für ein fahrzeugexternes Steuergerät (9) aufweist und der Immobilizer (5) mit dem Steuergerät (2) über einen Abschnitt (3a) der Datenleitung (3) kommuniziert, wobei bei Nichtvorliegen eines Anforderungssignales (S3) vom fahrzeugexternen Steuergerät (9) mindestens dieses von dem Abschnitt (3a) der Datenleitung (3) abgetrennt ist.

2. Diebstahlsicherung nach Anspruch 1, dadurch gekennzeichnet, daß das fahrzeugexterne Steuergerät (9) ein Diagnosegerät ist.

3. Diebstahlsicherung nach Anspruch 1 oder 2, dadurch gekennzeichnet, daß die Abtrennung des Abschnitts (3a) der Datenleitung (3) durch einen Schalter (8) in der Datenleitung (3) erfolgt.

4. Diebstahlsicherung nach einem der Ansprüche 1 bis 3, dadurch gekennzeichnet, daß das Anforderungssignal (S3) von dem fahrzeugexternen Steuergerät (9) gesendet wird.

5. Diebstahlsicherung nach Anspruch 3 oder 4, dadurch gekennzeichnet, daß der Schalter (8) bei Vorliegen des Anforderungssignals (S3) geschlossen wird, wenn die Kommunikation des Immobilizers (5) mit dem Steuergerät (2) beendet ist.

6. Diebstahlsicherung nach Anspruch 3 oder 4, dadurch gekennzeichnet, daß der Schalter (8) bei nicht betriebsbereitem Immobilizer (5) geschlossen ist.

7. Diebstahlsicherung nach einem der Ansprüche 3 bis 6, dadurch gekennzeichnet, daß der Schalter (8) im Immobilizer (5) integriert ist.

8. Diebstahlsicherung nach einem der Ansprüche 4 bis 7, dadurch gekennzeichnet, daß bei Nichtvorliegen des Anforderungssignals (S3) von dem fahrzeugexternen Steuergerät (9) eines der über die Datenleitung (3) verbundenen Steuergeräte (2) oder der Immobilizer (5) als Master arbeitet.

9. Diebstahlsicherung nach einem der Ansprüche 1 bis 7, dadurch gekennzeichnet, daß das fahrzeugexterne Steuergerät (9) im angeschlossenen Zustand von dem den Datenaustausch kontrollierenden Steuergerät (2) oder dem Immobilizer (5) die Masterfunktion übernimmt.

10. Diebstahlsicherung nach einem der Ansprüche 1 bis 7, dadurch gekennzeichnet, daß das fahrzeugexterne Steuergerät (9) einen uneingeschränkten Datenaustausch mit den Steuergeräten (2, 6, 7) nur dann führen kann, wenn wenigstens eines der Steuergeräte durch den Immobilizer (5) entriegelt ist.

11. Diebstahlsicherung nach einem der Ansprüche 1 bis 10, dadurch gekennzeichnet, daß der Immobilizer (5) nach dem Vergleich der eingehenden Signale (S1) mit seinem abgespeicherten Daten ein von den eingehenden Signalen (S2) abgeleitetes Signal bildet und an die mit ihm kommunizierenden Steuergeräte (2) sendet.

12. Diebstahlsicherung nach einem der Ansprüche 1 bis 11, dadurch gekennzeichnet, daß der Immobilizer (5) in einem der mit ihm kommunizierenden Steuergerät (2) integriert ist.

## Claims

1. Anti-theft system, in particular designed as a lock to prevent automotive vehicles being driven away, which communicates with at least one control device (2) and has an immobiliser (5) which compares incoming signals (S1) with stored data and, in the event of there being insufficient match, outputs locking signals (S2) to the control device (2), in particular to the control device of a prime mover, which locking signals within this control device prevent the transfer of control signals for functions necessary to operation, wherein the immobiliser (5) communicates with the control device by way of a data line (3) which is already present and is used for other purposes, characterised in that the data line (3) has a connection (4) for a control device (9) outside the vehicle, and the immobiliser (5) communicates with the control device (2) by way of a portion (3a) of the data line (3), wherein in the absence of a demand signal (S3) from the control device (9) outside the vehicle at least this control device is separated from the portion (3a) of the data line (3).

2. Anti-theft system according to claim 1, characterised in that the control device (9) outside the vehicle is a diagnostic device.

3. Anti-theft system according to claim 1 or 2, characterised in that the separation of the portion (3a) of the data line (3) is achieved by a switch (8) in the data line (3).

4. Anti-theft system according to one of claims 1 to 3, characterised in that the demand signal (S3) is emitted by the control device (9) outside the vehicle.

5. Anti-theft system according to claim 3 or 4, characterised in that when the demand signal (S3) is present the switch (8) is closed when the communication of the immobiliser (5) with the control device (2) is ended.

6. Anti-theft system according to claim 3 or 4, characterised in that the switch (8) is closed when the immobiliser (5) is not ready for operation.

7. Anti-theft system according to one of claims 3 to 6, characterised in that the switch (8) is integrated in the immobiliser (5).

8. Anti-theft system according to one of claims 4 to 7, characterised in that in the absence of the demand signal (S3) from the control device (9) outside the vehicle one of the control devices (2), connected via the data line (3), or the immobilizer (5) operates as the master.

9. Anti-theft system according to one of claims 1 to 7, characterised in that, in the connected state, the control device (9) outside the vehicle takes over the master function from the control device (2) controlling the data exchange or from the immobiliser (5).

10. Anti-theft system according to one of claims 1 to 7, characterised in that the control device (9) outside the vehicle can carry out an unlimited data exchange with the control devices (2, 6, 7) only when at least one of the control devices is released by the immobiliser (5).

11. Anti-theft system according to one of claims 1 to 10, characterised in that the immobiliser (5), after comparison of the incoming signals (S1) with its stored data, forms a signal derived from the incoming signals (S2) and emits the said signal to the control devices (2) communicating with it.

12. Anti-theft system according to one of claims 1 to 11, characterised in that the immobiliser (5) is integrated in a control device (2) communicating therewith.

## Revendications

1. Dispositif antivol, conçu notamment comme blocage de démarrage pour des véhicules automobiles, qui communique avec au moins un appareil de commande (2) et qui comporte un immobiliseur (5) qui compare des signaux entrants (S1) à des données mémorisées et qui, si les signaux ne coïncident pas, envoie à l'appareil de commande (2), notamment à l'appareil de commande d'un moteur, des signaux de blocage (S2) qui empêchent dans cet appareil de commande la transmission de signaux de commande pour des fonctions essentielles au fonctionnement, l'immobiliseur (5) communiquant avec l'appareil de commande par l'intermédiaire d'une ligne de données (3) déjà existante et utilisée dans d'autres buts, caractérisé en ce que la ligne de données (3) comporte un raccordement (4) pour un appareil de commande (9) externe au véhicule et en ce que l'immobiliseur (5) communique avec l'appareil de commande (2) par l'intermédiaire d'un tronçon (3a) de la ligne de données (3), au moins l'appareil de commande (9) externe au véhicule étant coupé du tronçon (3a) de la ligne de données (3) en cas d'absence d'un signal de demande (S3) issu de cet appareil de commande.

2. Dispositif antivol selon la revendication 1, caractérisé en ce que l'appareil de commande (9) externe au véhicule est un appareil de diagnostic.

3. Dispositif antivol selon la revendication 1 ou 2, caractérisé en ce que la coupure du troncon (3a) de la ligne de données (3) s'effectue au moyen d'un interrupteur (8) dans la ligne de données (3).

4. Dispositif antivol selon l'une des revendications 1 à 3, caractérisé en ce que le signal de demande (S3) est envoyé par l'appareil de commande (9) externe au véhicule.

5. Dispositif antivol selon la revendication 3 ou 4, caractérisé en ce que l'interrupteur (8) est fermé si le signal de demande (S3) est présent lorsque la communication de l'immobiliseur (5) avec l'appareil de commande (2) est terminée.

6. Dispositif antivol selon la revendication 3 ou 4, caractérisé en ce que l'interrupteur (8) est fermé si l'immobiliseur (5) n'est pas prêt à fonctionner.

7. Dispositif antivol selon l'une des revendications 3 à 6, caractérisé en ce que l'interrupteur (8) est intégré dans l'immobiliseur (5).

8. Dispositif antivol selon l'une des revendications 4 à 7, caractérisé en ce que, si le signal de demande (S3) issu de l'appareil de commande (9) externe au véhicule est absent, l'un des appareils de commande (2) reliés par l'intermédiaire de la ligne de données (3) ou l'immobiliseur (5) fonctionne comme maître.

9. Dispositif antivol selon l'une des revendications 1 à 7, caractérisé en ce que l'appareil de commande (9) externe au véhicule dans l'état connecté prend en charge la fonction de maître de l'appareil de commande (2) contrôlant l'échange de données ou de l'immobiliseur (5).

10. Dispositif antivol selon l'une des revendications 1 à 7, caractérisé en ce que l'appareil de commande (9) externe au véhicule ne peut mettre en oeuvre un échange de données illimité avec les appareils de commande (2, 6, 7) que si au moins l'un des appareils de commande est déverrouillé par l'immobiliseur (5).

11. Dispositif antivol selon l'une des revendications 1 à 10, caractérisé en ce que l'immobiliseur (5), après la comparaison des signaux entrants (S1) avec ses données mémorisées, forme un signal déduit des signaux entrants (S2) et l'envoie aux appareils de commande (2) communiquant avec lui.

12. Dispositif antivol selon l'une des revendications 1 à 11, caractérisé en ce que l'immobiliseur (5) est intégré dans l'un des appareils de commande (2) communiquant avec lui.
